**Europäisches Patentamt**

**European Patent Office**

**Office européen des brevets**

(19)

(11) Veröffentlichungsnummer: **0 243 674 B1**

(12) # EUROPÄISCHE PATENTSCHRIFT

(45) Veröffentlichungstag der Patentschrift: **11.09.91**

(51) Int. Cl.⁵: **H01S 3/03**, H01S 3/041

(21) Anmeldenummer: **87104336.0**

(22) Anmeldetag: **24.03.87**

(54) **Gaslaser.**

(30) Priorität: **02.05.86 DE 3614912**

(43) Veröffentlichungstag der Anmeldung:
**04.11.87 Patentblatt 87/45**

(45) Bekanntmachung des Hinweises auf die
Patenterteilung:
**11.09.91 Patentblatt 91/37**

(84) Benannte Vertragsstaaten:
**DE GB**

(56) Entgegenhaltungen:
**US-A- 3 599 107**
**US-A- 3 753 144**

**PATENT ABSTRACTS OF JAPAN, Band 9, Nr.
147 (E-323)[1870], 21. Juni 1985 & JP-A-60-28
284**

(73) Patentinhaber: **Siemens Aktiengesellschaft
Wittelsbacherplatz 2
W-8000 München 2(DE)**

(72) Erfinder: **Hahn, Günther, Dr., Dipl.-Phys.
Eichbaumstrasse 40
W-8011 Höhenkirchen(DE)**
Erfinder: **Krüger, Hans, Dipl.-Phys.
Peralohstrasse 13
W-8000 München 83(DE)**
Erfinder: **Lamprecht, Herbert, Dr., Dipl.-Phys.
Am Harras 12
W-8000 Muenchen 70(DE)**
Erfinder: **Seiffarth, Werner, Dipl.-Phys.
Pfarrer-Braun-Strasse 19
W-8202 Bad Aibling(DE)**

**Beschreibung**

Die vorliegende Erfindung betrifft einen Gaslaser nach dem Oberbegriff des Patentanspruchs 1. Ein derartiger Gaslaser ist aus der US-A-3,753,144 bekannt. In dem dort beschriebenen Gaslaser wird das Entladungsrohr durch Rohrstücke aus Metall, unter anderem Kupfer gebildet, die an Kühlblechen befestigt und von benachbarten Rohrstücken beabstandet sind. Bei diesem Aufbau wird durch die Laserentladung ein Absputtern des Kupfers bewirkt, welches zu einem Metallniederschlag auf dem Keramikrohr und damit zu einer Verschlechterung der Isolation und möglicherweise zu elektrischen Überschlägen führt.

Die Aufgabe, die der vorliegenden Erfindung zugrundeliegt, besteht darin, einen in Stapelbauweise ausgeführten Laser für Ausgangsleistungen im Milliwattbereich einsetzbar zu machen, dabei mit geringem Aufwand auszukommen und eine geringe Baugröße zu erreichen.

Diese Aufgabe wird durch die kennzeichnenden Merkmale des Patentanspruchs 1 gelöst. Die Kühlscheiben aus Kupfer sind aus dem eigentlichen Entladungsraum des Entladungskanals herausgehalten, ein Absputtern von Kupfer infolge der Laserbestrahlung ist weitgehend verhindert. Der durch die benachbarten Keramikscheiben im Bereich der Ausnehmung der entsprechenden Kühlscheibe gebildete Spalt kann zusätzlich eventuell noch in geringfügigem Maße aufsputterndes Kupfer zur Kondensation bringen, hat also eine Schirmwirkung.

Vorteilhaft enthalten die Keramikscheiben als Gasrückführungskanäle in gleichem Abstand vom Entladungskanal achsparallele Bohrungen, wobei die Bohrungen benachbarter Keramikscheiben miteinander fluchten und wobei die Kühlscheiben an diese Bohrungen nicht heranreichen. Um eine möglichst achssymmetrische Belastung bei thermischen Spannungen zu erhalten, sind vorteilhaft in den Keramikscheiben je zwei oder mehr Bohrungen in Umfangrichtung verteilt vorgesehen, wobei die Kühlscheiben je eine Ausnehmung enthalten, in welche die Entladungskanäle und die Gasrückführungskanäle einmünden. Diese Ausführungsform bietet eine besonders tiefe Zurücksetzung der Kühlscheiben vom Entladungskanal und damit verbunden eine extrem geringe Sputtergefahr an den Kupferscheiben. Die Unterbrechung des Entladungskanals stört die Laserleistung nicht wesentlich, die Unterbrechung der Gasrückführungskanäle ist für einen lokalen Druckausgleich vorteilhaft.

Als Material für die Keramikscheiben wird besonders vorteilhaft die relativ billige und ungiftige $Al_2O_3$-Keramik eingesetzt. Eine optimale Wärmeabfuhr und eine nicht mehr störende Sputterneigung wird erreicht, indem die Kühlscheiben vom Entladungskanal um zumindest das Zweifache ihrer Dicke zurückgesetzt sind.

Eine relativ kurze Bauweise ohne die Gefahr von Rückzündungen der Laserentladung in den Gasrückführungskanälen ist erreicht, indem die Keramikscheiben zur Bildung des Entladungskanals miteinander fluchtende Bohrungen enthalten und indem sie als Gasrückführungskanäle weitere Bohrungen enthalten, wobei diese Bohrungen in benachbarten Keramikscheiben gegeneinander versetzt sind.

Die Kühlscheiben können in einer Ausführungsform nahe an den Entladungskanal heranreichen, in der die Keramikscheiben Bohrungen zur Bildung von Gasrückführungskanälen und in der die Kühlscheiben ebenfalls Bohrungen enthalten, die jeweils zusammengehörige Bohrungen zur Gasrückführung in den benachbarten Keramikscheiben zumindest überlappen.

Die Erfindung wird nun anhand von drei Figuren näher erläutert. Sie ist nicht auf die in den Figuren gezeigten Beispiele beschränkt.

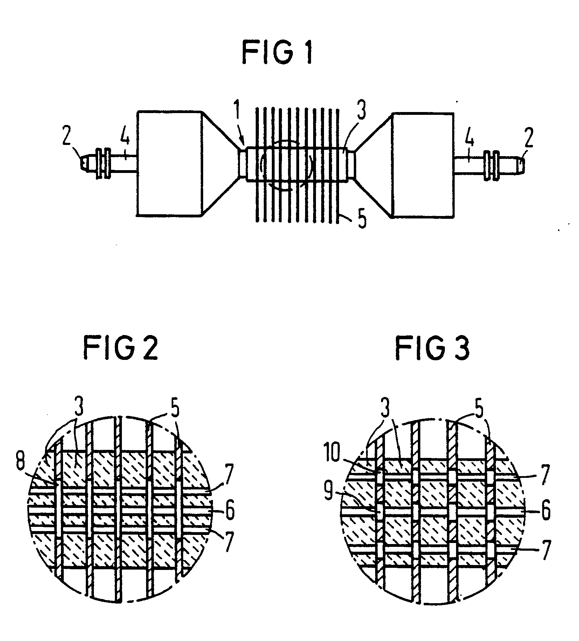

Fig. 1 zeigt einen erfindungsgemäßen Laseraufbau. Die Fig. 2 und 3 zeigen Ausschnitte aus zwei Ausführungsformen des Lasers gemäß Fig. 1 in geschnittener Ansicht.

In einem Gaslaser trägt ein Laserrohr 1 über weitere Rohrstücke 4 die Laserspiegel 2. Das Laserrohr 1 ist aus Keramikscheiben 3 und Kühlscheiben 5 zusammengesetzt. Die Keramikscheiben 3 bestehen vorzugsweise aus $Al_2O_3$-Keramik, da diese billig und im Gegensatz zum häufig eingesetzten BeO ungiftig sind.

Die Keramikscheiben 3 enthalten miteinander fluchtende Bohrungen 6, deren Rotationsachse mit der Symmetrieachse der Keramikscheiben 3 zusammenfällt. Zu diesen koaxial liegen Bohrungen 8 in den Kühlscheiben 5. Die Kühlscheiben 5 bestehen aus einem gut wärmeleitfähigen Metall, insbesondere aus Kupfer. Die Bohrungen 6 bilden den Entladungskanal des Lasers, die Bohrungen 7 die Rückführungskanäle. Die Dicke der Kühlscheiben 5 ist relativ klein gegenüber der Dicke der Keramikscheiben 3, so daß im Bereich der Kühlscheiben 5 keine unzulässige Störung der Laserentladung stattfindet. Beispielsweise sind die Kühlscheiben etwa 0,5 mm und die Keramikscheiben etwa 3 mm dick. Eine Dicke der Kühlscheiben bis 0,7 mm und ein Verhältnis der Dicke der Kühlscheiben zur Dikke der Keramikscheiben von 1:4 ergeben stabile Entladungsrohre mit hoher Wärmeableitung.

In der Ausführungsform gemäß Fig. 3 enthalten die Kühlscheiben 5 Bohrungen 9 und 10, welche jeweils mit den Bohrungen 6 bzw. den Bohrungen 7 in den Keramikscheiben fluchten und einen nur wenig größeren Durchmesser besitzen als die entsprechenden Bohrungen in den Keramikscheiben. Diese Ausführungsform ergibt eine besonders intensive Wärmeabfuhr. Dabei empfiehlt es sich, daß zwischen den Rändern der Bohrungen 6 und den Rändern der benachbarten Bohrungen 9 ein Abstand von zumindest dem Zweifachen der Dicke der Kühlscheiben besteht. Dieser Abstand reicht aus, um ein nennenswertes Absputtern von Kupfer zu verhindern und eventuell dennoch abgesputtertes Kupfer weitgehend im Bereich der Bohrung 9 an den benachbarten Keramikscheiben kondensieren zu lassen, ohne daß innerhalb der Bohrungen 6 eine störende Metallbedampfung auftritt.

## Patentansprüche

1. Gaslaser, welcher ein Entladungsrohr (1) enthält, welches aus abwechselnd aufeinander gestapelten Keramikscheiben (3) und Kühlscheiben (5) zusammengesetzt ist, wobei der so gebildete Stapel den Entladungskanal (6) und zumindest einen Gasrückführungskanal (7) enthält, wobei die Kühlscheiben (5) im wesentlichen aus Kupfer bestehen und über die Keramikscheiben nach außen vorstehen,
**dadurch gekennzeichnet,**
daß die Keramikscheiben (3) an den Entladungskanal näher heranreichen als die Kühlscheiben (5) und daß das Entladungsrohr Spiegel (2) für die Resonanz des Laserlichtes trägt.

2. Gaslaser nach Anspruch 1,
**dadurch gekennzeichnet,**
daß die Keramikscheiben (3) als Gasrückführungskanäle in gleichem Abstand vom Entladungskanal achsparallele Bohrungen enthalten, daß die Bohrungen benachbarter Keramikscheiben miteinander fluchten und daß die Kühlscheiben (5) an diese Bohrungen (7) nicht heranreichen.

3. Gaslaser nach Anspruch 2,
**dadurch gekennzeichnet,**
daß die Keramikscheiben (3) je zwei oder mehr in Umfangsrichtung verteilte Bohrungen (7) enthalten und daß die Kühlscheiben je eine Ausnehmung enthalten, in welche die den Entladungskanal bildenden Bohrungen (6) und die den Gasrückführungskanal bildenden Bohrungen (7) einmünden.

4. Gaslaser nach Anspruch 1,
**dadurch gekennzeichnet,**
daß die Keramikscheiben aus $Al_2O_3$-Keramik bestehen.

5. Gaslaser nach einem der Ansprüche 1 bis 4,
**dadurch gekennzeichnet,**
daß die Kühlscheiben vom Entladungskanal um zumindest das Zweifache ihrer Dicke zurückgesetzt sind.

6. Gaslaser nach einem der Ansprüche 1 oder 3 bis 5,
**dadurch gekennzeichnet,**
daß die Keramikscheiben zur Bildung des Entladungskanals miteinander fluchtende Bohrungen enthalten und daß sie als Gasrückführungskanäle weitere Bohrungen enthalten und daß diese Bohrungen benachbarter Keramikscheiben gegeneinander versetzt sind.

7. Gaslaser nach Anspruch 1,
**dadurch gekennzeichnet,**
daß die Keramikscheiben Bohrungen zur Bildung von Gasrückführungskanälen enthalten, daß die Kühlscheiben ebenfalls Bohrungen enthalten, die jeweils zusammengehörige Bohrungen zur Gasrückführung in den benachbarten Keramikscheiben zumindest überlappen.

## Claims

1. Gas laser, which includes a discharge tube (1), which is composed of ceramic wafers (3),. stacked alternately on one another and cooling wafers (5), the stack thus formed including the discharge channel (6) and at least one gas return channel (7), the cooling wafers (5) consisting essentially of copper and projecting outwards beyond the ceramic wafers, characterised in that the ceramic wafers (3) reach nearer the discharge channel than the cooling wafers (5), and in that the discharge tube carries mirrors (2) for resonance of the laser light.

2. Gas laser according to Claim 1, characterised in that as gas return channels the ceramic wafers (3) include axially parallel bores at an equal distance from the discharge channel, in that the bores of neighbouring ceramic wafers are aligned with one another, and in that the cooling wafers (5) do not reach these bores (7).

3. Gas laser according to Claim 2, characterised in that the ceramic wafers (3) each include two or more bores (7) distributed in the circumferential direction, and in that the cooling wafers each include a recess into which the bores (6) forming the discharge channel and the bores (7) forming the gas return channel run.

4. Gas laser according to Claim 1, characterised in that the ceramic wafers consist of $Al_2O_3$ ceramic.

5. Gas laser according to one of Claims 1 to 4, characterised in that the cooling wafers are set back from the discharge channel by at least twice their thickness.

6. Gas laser according to one of Claims 1 or 3 to 5, characterised in that the ceramic wafers include mutually aligned bores for forming the discharge channel, and in that they contain further bores as gas return channels, and in that these bores of neighbouring ceramic wafers are mutually offset.

7. Gas laser according to Claim 1, characterised in that the ceramic wafers include bores for forming gas return channels, in that the cooling wafers likewise include bores which in each case at least overlap associated bores for the return of gas in the neighbouring ceramic wafers.

**Revendications**

1. Laser à gaz, qui contient un tube à décharge (1) formé par la réunion de disques céramiques (3) et de disques de refroidissement (5) empilés alternativement les uns sur les autres, la pile ainsi formée contenant le canal de décharge (6) et au moins un canal (7) de renvoi du gaz, les disques de refroidissement (5) étant réalisés essentiellement en cuivre et faisant saillie extérieurement par rapport aux disques céramiques, caractérisé par le fait que les disques céramiques (3) sont plus rapprochés du canal de décharge que ne le sont les disques de refroidissement (5) et que le tube à décharge porte des miroirs (2) pour la résonance de la lumière laser.

2. Laser à gaz suivant la revendication 1, caractérisé par le fait que les disques céramiques (3) contiennent, en tant que canaux de renvoi du gaz, des perçages à axes parallèles situés à une même distance du canal de décharge, que les perçages de disques céramiques voisins sont alignés entre eux et que les disques de refroidissement (5) ne s'étendent pas jusqu'à ces perçages (7).

3. Laser à gaz suivant la revendication 2, caractérisé par le fait que les disques céramiques (3) contiennent respectivement deux ou un plus grand nombre de perçages (7) répartis dans la direction circonférentielle et que les disques de refroidissement contiennent des évidements respectifs, dans lesquels débouchent les perçages (6) qui constituent le canal de décharge, et les perçages (7) qui constituent le canal de renvoi du gaz.

4. Laser à gaz suivant la revendication 1, caractérisé par le fait que les disques céramiques sont constitués par une céramique à base de $Al_2O_3$.

5. Laser à gaz suivant l'une des revendications 1 à 4, caractérisé par le fait que les disques de refroidissement sont en retrait par rapport au canal de décharge, sur une hauteur égale au moins au double de leur épaisseur.

6. Laser à gaz suivant l'une des revendications 1 ou 3 à 5, caractérisé par le fait que les disques céramiques contiennent des perçages alignés entre eux pour former le canal de décharge et qu'ils contiennent d'autres perçages constituant des canaux de renvoi du gaz et que ces perçages de disques céramiques voisins sont décalés entre eux.

7. Laser à gaz suivant la revendication 1, caractérisé par le fait que les disques céramiques contiennent également des perçages pour la formation de canaux de renvoi du gaz, que les disques de refroidissement contiennent également des perçages qui chevauchent au moins des perçages respectivement associés pour le renvoi du gaz et ménagés dans les disques céramiques voisins.

# FIG 1

# FIG 2

# FIG 3